Europäisches Patentamt

European Patent Office

Office européen des brevets

(11) Publication number: **0 145 343**
**B1**

(12) **EUROPEAN PATENT SPECIFICATION**

(45) Date of publication of patent specification: **18.05.88**

(21) Application number: **84307986.4**

(22) Date of filing: **16.11.84**

(51) Int. Cl.⁴: **H 04 B 9/00,** G 01 M 11/00

(54) **Optical fibre test method and apparatus for performing the method.**

(30) Priority: **18.11.83 JP 217458/83**
**18.04.84 JP 77848/84**

(43) Date of publication of application:
**19.06.85 Bulletin 85/25**

(45) Publication of the grant of the patent:
**18.05.88 Bulletin 88/20**

(84) Designated Contracting States:
**FR GB**

(56) References cited:
**GB-A-1 538 195**
**US-A-4 343 532**

**TELCOM-REPORT, 6. Jahrgang, April 1983,**
**Siemens AG, Berlin u. München, p. 224**
**GERHARD GRAU "Optische**
**Nachrichtentechnik", 1981, SPRINGER VERLAG**
**Berlin-Heidelberg-New York, p. 89-93**

(73) Proprietor: **NIPPON TELEGRAPH AND**
**TELEPHONE CORPORATION**
**1-6 Uchisaiwaicho 1-chome Chiyoda-ku**
**Tokyo (JP)**

(72) Inventor: **Sumida, Shin**
**2-4-2-103 Higashihara**
**Mito-shi Ibaraki 310 (JP)**
Inventor: **Murata, Hisashi**
**2-231-2-334 Miwa**
**Mito-shi Ibaraki 310 (JP)**
Inventor: **Katsuyama, Yutaka**
**1825-133 Hirasu**
**Mito-shi Ibaraki 310 (JP)**

(74) Representative: **Pike, Harold John et al**
**Abel & Imray Northumberland House 303-306**
**High Holborn**
**London, WC1V 7LH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a method of, and apparatus for, measurement of optical losses by means of a test fibre.

Two methods of optical loss measurement represent the state of the art, the methods being the cutback method in which optical losses are assessed by comparing the power received on the launching side of a testfibre with the power received on the output end face of the fibre, and the back-scatter method in which optical losses are assessed by measuring the backscatter from an optical signal which is propagating within the fibre, the backscatter being due to Rayleigh scattering and the backscattered energy propagating in the direction of the fibre input end.

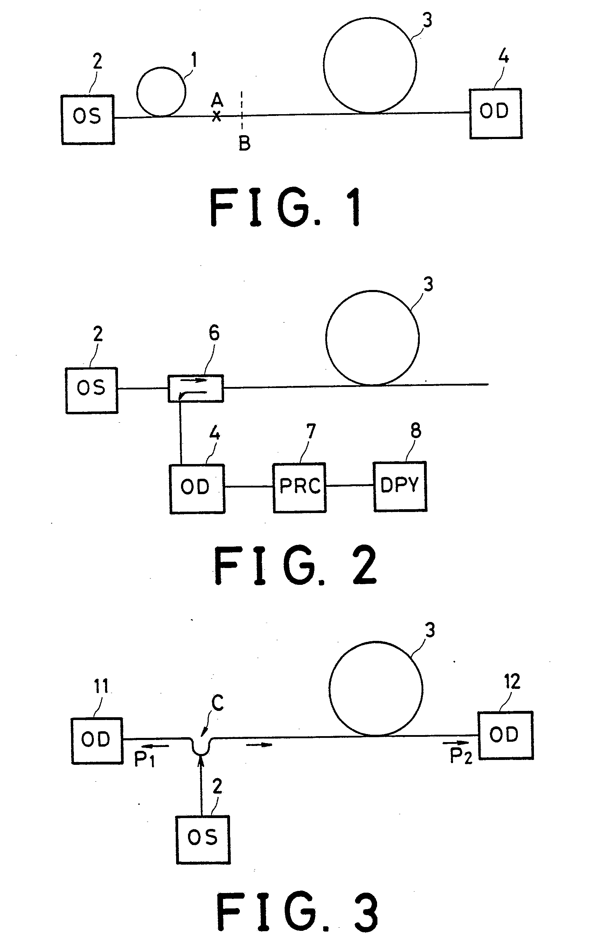

The cutback method comprises, as shown in Fig. 1, the steps of launching an optical signal from an optical source 2 onto one of the end faces of an exciting fibre 1, connecting a test optical fibre 3 to the other end of the exciting fibre at point A, detecting the optical signal at the other end face of the test fibre 3 by means of an optical detector 4, cutting the optical test fibre 3 at a point B which is several metres from the connection point A, detecting the optical signal at the point B, and comparing the optical powers received at both points to calculate optical losses.

Telecom-Report, 6 January, April 1983 (page 224 2nd column lines 23—27) of Siemans AG, Berlin und Munchen, gives the equation $L = -10 \log_{10} P_2/P_1$ dB for the losses in an optical fibre between two transverse sections through which the optical power levels are, respectively, $P_1$ and $P_2$ where $P_2 < P_1$.

In the cutback method, the optical test fibre 3 is cut in order to measure the optical power coupled to it and to exclude the loss at the connection point A. Although the measurement is precise, the method involves the complication of cutting and connecting the exciting optical fibre 1 with the test optical fibre 3. A further drawback of the cutback method is that the cost for test at manufacturing plants is increased by the need to cut the optical fiber by several metres, that is, the length equal to the distance from the point A to the point B, every time an optical fibre is tested, leading to higher product prices.

The backscatter method, as shown in Fig. 2, comprises the steps of launching an optical signal directly onto an end face of a test optical fibre 3 from an optical source 2 using a high output pulse semiconductor laser, separating, by means of a directional coupler 6, the backscattered light which is generated in the test optical fibre and which propagates in the direction of the input end of the fibre, and measuring the backscattered light with an optical detector 4. This back scatter method is less complicated than the cutback method and does not destroy the optical fibre in testing. The backscatter method does, however, require a directional coupler 6 and other optical components for separating the input light. Further the backscatter method involves more sophisticated techniques and optical and electric components, because, in the method, weak backscattered light is received by an optical detector 4 using APD, processed in an averages 7 in order to separate noise from the signal and displayed by a display 8. The need for sophisticated techniques and equipment is reflected in the price of any product dependent on the backscatter method of testing.

There are various other test operations carried out on optical fibres during manufacture and such other test operations not connected with energy loss measurements are generally not applicable to energy loss measurements. For example, patent specification GB—A—1 538 195 discloses a method of detecting light energy in a leakage mode radiated from a fibre into which the light energy may be launched by illuminating a straight portion of the fibre or by illiminating a portion of the fibre formed into a curve of large radius. Such an operation concentrates the light energy in the fibre cladding and would be unsuitable for loss measurements which require the light energy concentrated in the fibre core.

An objection of the present invention is the provision of a method, simpler than previously known methods, for measuring optical losses in a test fibre, and apparatus for performing the method of measurement.

In accordance with the present invention, a method of measuring the losses of an optical fibre by launching light into the fibre, detecting the power levels of light travelling along the fibre at two points along the fibre, and calculating the losses L from the equation

$$L = -10 \log_{10} P_2/P_1 \text{ dB,}$$

where $P_1$ and $P_2$ are the power levels of the light detected at the two points along the fibre, is characterised in that the light is launched into the core of the fibre by bending the fibre, restorably, close to one of its ends with a radius of substantially no more than 3 mm and illuminating the fibre at the bend, and the optical power loss is calculated from the power levels of the light detected at the ends of the fibre.

The bent portion may be covered by means having an inner surface of light scattering material, in order to obtain more even distribution of the optical signals from the bent portion in both directions.

The bent portion and the optical source may be enclosed by means having an inner surface of light reflecting material, in order to improve the coupling efficiency between the signal source and the optical fibre.

Apparatus for measuring the losses of an optical fibre includes a light source for launching light into the fibre and meams for detecting the power levels of the light, travelling along the fibre, at two points along the fibre, characterised in that the apparatus includes means for producing a removable bend in the fibre, close to one of its ends, with a radius of substantially no more than 3 mm in the vicinity of the light source so as to launch light into the core of the fibre, and means arranged to detect the power levels of the light reaching the ends of the fibre.

The means for producing a removable bend in the fibre may be a sheath structure arranged to enclose the fibre at or near the bend or a pin around which the fibre is wrapped.

It will be understood that, if an optical fibre propagating light is bent with a small radius over part of its length, the optical signal propagating through the fibre core leaks out at the bend and through the cladding because the bend does not satisfy the conditions for total reflection at the cladding. As the situation is reversible, if this bent portion is, conversely, illuminated from outside, an optical signal may be launched into the optical fibre. The bent portion may be restored to the original state on completion of the measurement.

This invention enables the launching of an optical signal into an optical fibre, which may be a coated fibre, and the measurement of the losses of an optical fibre by means of apparatus including an optical source and a power meter, without the need to cut or otherwise damage the fibre, and reduces the number of steps required for performing test measurements. The cost of testing at present accounts for a large portion of the price of optical fibres, and if the non-destructive test according to this invention is applied, the cost of testing will be cut by a large margin, thereby improving the economic efficiency of optical communication systems.

The area near the coupling point which is bent, may be covered by means having an inner surface of light scattering material, in order for the coupled light to be distributed uniformly in both directions. Further, the bent portion as well as the optical element may be enclosed by means having an inner surface of light reflecting material so that the signal coupling may have higher efficiency. These arrangements will improve the signal/noise ratio of the coupled optical signal, enhance precision in measurement and expand the dynamic range of the signal when transferring data.

Fig. 1 is a block diagram illustrating the cutback method belonging to the prior art,

Fig. 2 is a block diagram illustrating the backscatter method belonging to the prior art,

Fig. 3 is a diagrammatic representation of an arrangement for measuring optical losses in a fibre, in accordance with the method of the present invention,

Fig. 4 is a perspective view of one form of apparatus suitable for performing the method of the invention,

Fig. 5 is a graphical representation of the relationships of the bending radius, power and coupling efficiency of a bent portion of an optical test fibre,

Fig. 6 is a representation of measured values of coupling efficiencies of optical fibres with different claddings,

Fig. 7 is a histogram of difference in power (dB) measured at the end faces of an optical fibre the ends of which are each 2 metres from the launching point of the light energy,

Fig. 8 is a graphical representation of optical power distribution across one end face of an optical fibre which is bent at various distances from the end face, in which the bend is the point at which light is launched into the test fibre,

Fig. 9 is a graphical representation of the relationship between lateral pressure and increase in losses for various radii of a bent portion of the test optical fibre,

Fig. 10 is a histogram showing measured losses of a silicone-coated optical test fibre subjected to the method of the present invention,

Fig. 11 is a histogram showing measured losses of a polyethylene-coated optical test fibre subjected to the method of the present invention,

Fig. 12 is a perspective view representation of the main parts of an apparatus suitable for performing the method of the present invention,

Fig. 13 is a graphical representation of the coupling characteristics of a test fibre at two intensities of illumination,

Fig. 14 is a perspective view representation, partly cut away, of a major part of apparatus for performing the method of the invention,

Fig. 15 is a perspective view representation of a major part of another apparatus for performing the method of the invention,

Fig. 16 is a diagrammatic representation of a further arrangement for energising a bend in a test fibre in carrying out the method of the invention, and

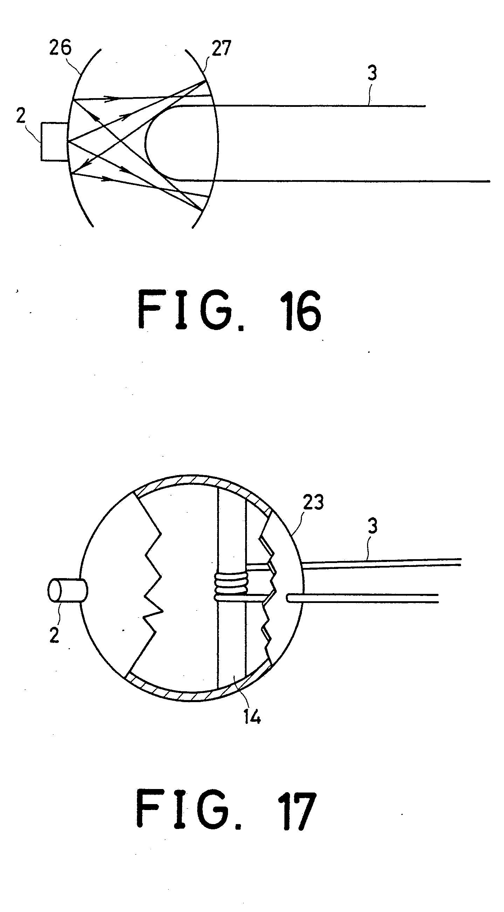

Fig. 17 is a perspective view representation, partly cut away, of a major part of a further arrangement for performing the method of the invention. In the drawings the reference numeral 1 denotes an exciting optical fiber, 2 an optical source, 3 a test optical fibre, 4 an optical detector, 6 a directional coupler, 7 an averager, 8 a display, 11 and 12 optical detectors, 13 a lens system, 14 an optical test fibre fixing mount, 15 a spring member for the optical test fibre fixing mount, 23 a container the inside of which presents light-scattering material, 25 a tube, and 26 and 27 reflecting members.

Fig. 3 is a block diagram of an embodiment of the apparatus for performing the method of this invention. An optical test fibre 3 is bent slightly to include a small bending radius at a point C and the bent portion is side-illuminated from outside by means of an optical signal from an optical source 2, to cause the propagation of light inside the test fibre 3. The light propagates towards both ends through the optical test fibre 3 to be detected by optical detectors 11 and 12. If the optical fibre length between the launching point C and the optical detector 11 is made sufficiently shorter than the length between the point C and the optical detector 12, the optical loss between the point C and the detector 11 may be ignored. If the optical power measured by the detector 11 is expressed as $P_1$ and the optical power measured by the optical detector 12 as $P_2$, the optical loss L may be approximated. Assuming equal power propagation towards the two ends of the fibre, the losses in the two fibre sections are given by

$$Loss_1 = 10 \log (P_0/P_1) \qquad (1)$$

$$Loss_2 = 10 \log (P_0/P_2) \qquad (2)$$

where $P_1$ and $P_2$ are output optical powers measured at the ends of the fibre and $P_0$ the power at the coupling point. If the fibre length $(L_1)$ is short, and therefore the loss $(Loss_1)$ in the short fibre section is negligibly small compared with the loss $(Loss_2)$ in the long fibre section, then the fibre loss L is easily calculated from (1) and (2) as

$$L = Loss_1 = 10 \log (P_1/P_2) \qquad (3)$$

As shown by the equation (3), the fibre loss measured by the method of the present invention does not depend on the absolute power of the light source and, therefore, precise power control of the light source is not necessary.

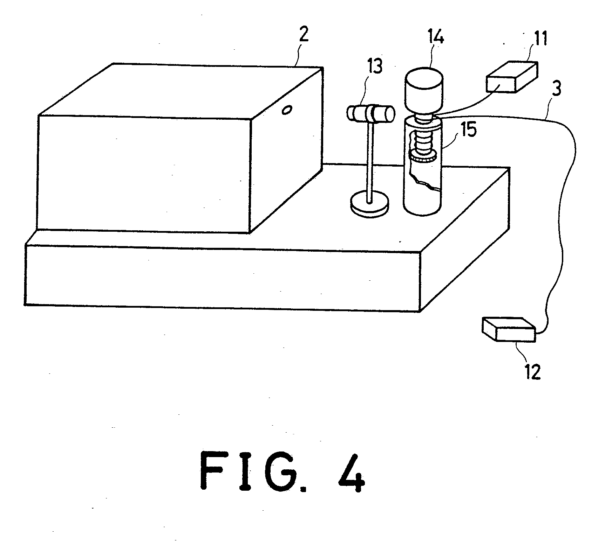

Fig. 4 is a perspective view representation of measurement apparatus for performing tests according to this invention. An optical source 2, a lens system 13 and a pin 14 are arranged on a stable and solid mount table. The optical source 2 is arranged in a manner such that the output light from the source 2 is slightly defocussed by the lens system 13 before illuminating the neck of the pin 14. An optical test fibre 3 is bent around the neck of the pin 14 in the shape of the letter U. The distance between the pin 14 and the optical detector 11 is 2 m. The pin 14 is provided with a spring structure 15 which holds the optical fibre 3 onto the neck portion of the pin 14. Pins having necks of various diameters are available for varying the curvature of the bend.

The optical source 2 is an He—Ne laser device with an output of 5 mW. In this embodiment, Model No. GLS 2027 manufactured by NEC was used. Optical power meters were used as the optical detectors 11, 12.

The lens system 13 has a magnifying power of 20 folds and the distance between the lens 13 and the pin 14 is about 20 mm. The laser beam from the test optical source 2 is expanded to about 4 mm width to illuminate the bent portion of the optical test fibre 3. The optical test fibre 3 may be, for example, a GI profile fibre having a core diameter of 50 μm, and a cladding outer diameter of 125 μm. The optical fibre 3 also has a cushion layer placed upon the cladding comprising silicone resin coated with polyethylene. The outer diameter of the cushion layer is 400 μm. Several samples of the test optical fibre 3 are used.

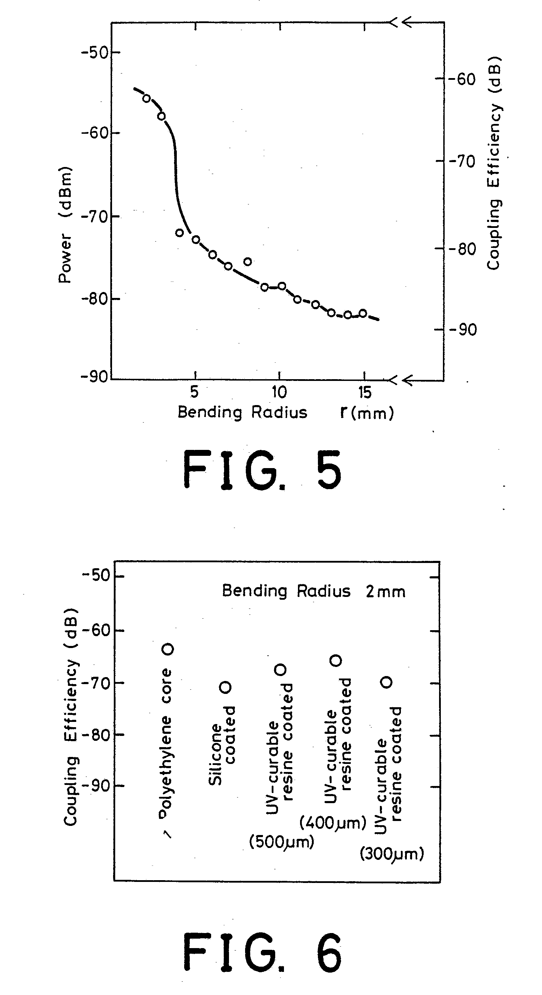

Fig. 5 shows the relation between the curvature of the bend at the launching point C and the coupled optical power which is obtained by means of the apparatus of Fig. 4. More specifically, the graph shows the values of optical power measured by a detector 11 when the curvature of the bent position of a test fibre at the launching point C is changed and an optical signal propagates 2 m within the fibre 3. The coupling efficiency (dB) is plotted along the right-hand axis assuming the output from the optical source 2 is 5 mW.

The graph indicates that the coupling efficiency increases significantly if the bending radius is 3 mm or less. For a bending radius of 2 mm, the inlet optical power is approximately −55 dBm. As the minimum power level of a high sensitivity power meter is −90 dBm, the meter has an excess dynamic range of 35 dB.

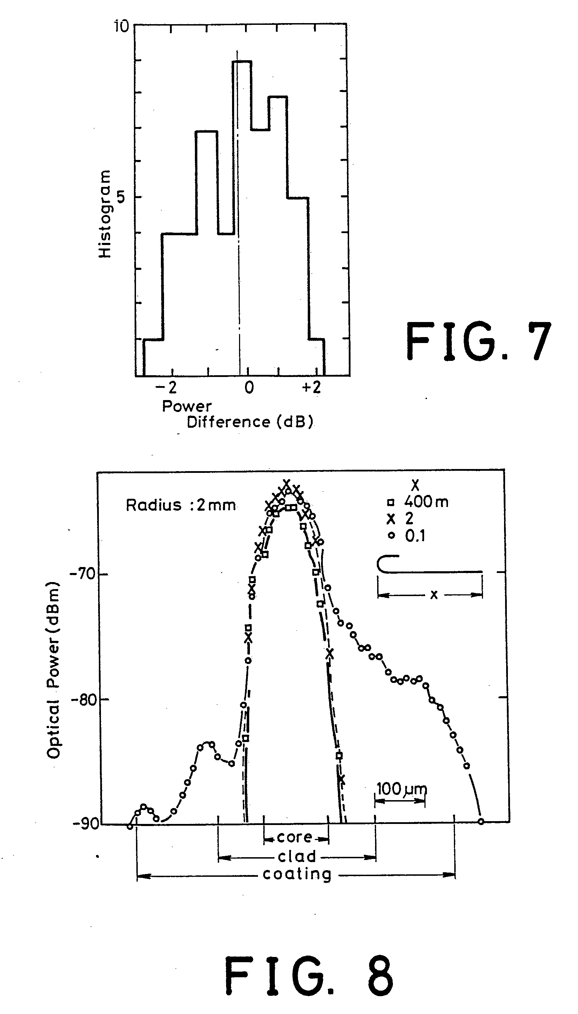

Fig. 6 is a graph showing the coupling efficiency obtained in tests on samples with different coatings. Using the same test apparatus, the coupling efficiency was measured. The results show that this invention may be applied not only to UV-curable resin coating and silicone coated fibre but also to polyethylene coated fibres. The bending radius was 2 mm for both tests.

A sample of an optical test fibre was bent to have the curvature radius of 2 mm, and the fibre was straightened to recover the original shape. There was not damage nor traces of bending after straightening. An optical signal was passed through the restored portion to confirm that no change had occurred in the behaviour of the fibre following bending.

Fig. 7 shows the result of a test which was conducted to confirm that optical signals of almost similar power were propagated from the launching point C through a test optical fibre in both directions on the system shown in Fig. 3. The distances from the launching point C to the detectors 11 and 12 were both made 2m, and the differences in the optical powers detected by both detectors were measured. For the test, 50 optical fibres of silicone coated with polyethylene were prepared, each of the fibres was mounted once on the test apparatus described above and the frequency distribution was examined. The result of the test is shown in Fig. 7. The graph indicates that the average difference in the power of the optical signals propagating in opposite directions is −0.1 dB although there is deviation of about ±2 dB. If enough measurements are performed to obtain an average, it may be assumed that similar power levels are propagated in each direction towards the ends of the optical test fibre.

There will be an error of about 0.1 dB even if the output light power $P_1$ of the shorter section of an optical test fibre is used to introduce light for the longer section of the fibre. A further test was conducted in order to determine whether or not a signal introduced at a bend in a test fibre propagates through cladding or coating material of the fibre instead of the core material. Using the same testing apparatus as above, and setting the distance from the launching point C to the optical detector 12 at 400 m, 2 m and 0.1 m, respectively, the distribution of the optical power was measured at the end faces of the fibre. Fig. 8 shows the result. The bending radius at the launching point of the fibre was 2 mm. At a fibre length of 0.1 m, optical power exists within the coating material. At fibre lengths of 2 m and 400 m, respectively, substantially the same optical power distributions are obtained, suggesting that the optical power was confined within the core. If a launching point is provided at a position 2 m from the end face of an optical test fibre, an optical signal which propagates in both directions toward the ends of the fibre from the launching point may be used to measure the loss on the assumption that the power is evenly distributed.

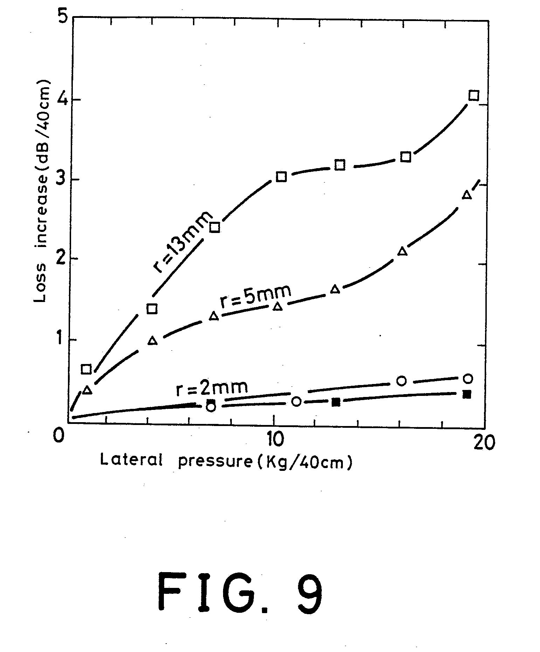

The question of whether or not the method of the present invention gives rise to multimode propagation in the optical test fibre was also investigated. Lateral pressure was applied to the test fibre and the loss increase was measured in order to examine the power distribution obtained in the method of excitation used in the present invention. Fig. 9 shows the relation between the lateral force and the loss increase when the bending radius of an optical test fibre at the launching point is increased. In Fig. 9, the symbol ■ indicates when the bending radius is 13 mm, Δ indicates a 5 mm radius, 0 indicates a 2 mm radius, and □ indicates the conventional stationary mode condition obtained in a dummy fibre. In the cases where the bending radii were relatively large (13 mm and 5 mm at the launching point) the loss increase is significant as lateral force increases. This may be attributable to the fact that optical power exists not only in lower modes but also in higher modes where losses increase, in other words, the excitation state is not the stationary mode distribution. When the bending radius is 2 mm, on the other hand, the result is substantially similar to that when excitation is carried through a dummy fibre. This may be because the light excited in higher mode is radiated simultaneously.

The above tests establish that if the bending radius is set close to 2 mm, not only is the coupling efficiency enhanced but also the loss is measured in a mode similar to the stationary mode realized with the dummy excitation method. The dummy excitation method, which is the most popular method for loss evaluation, is performed by the method of the present invention, but the method may be applied to other excitations by an appropriate change in the bending radius. The method of the present invention is most useful for the case where an optical fibre is directly excited by means of a laser diode.

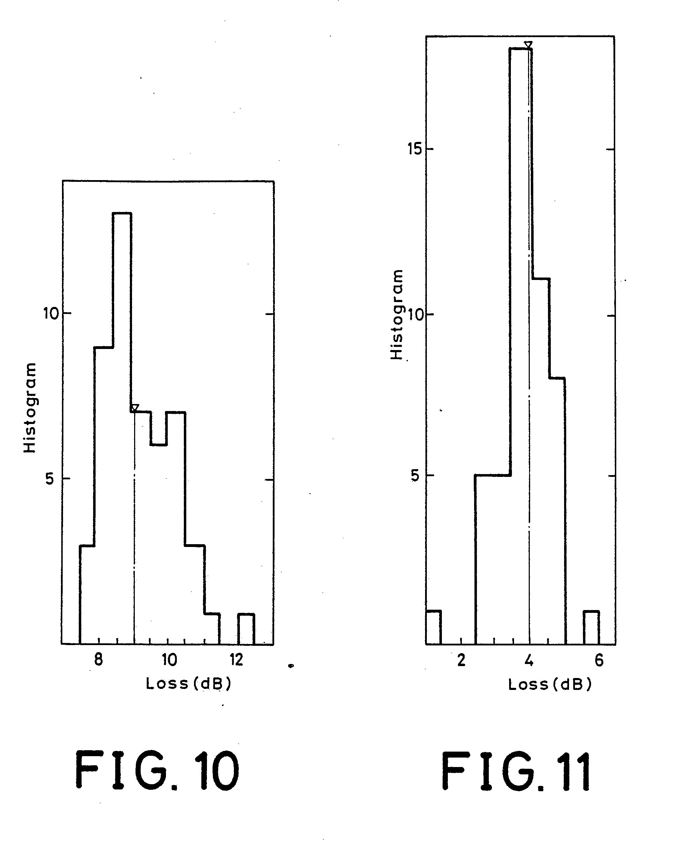

The losses measured under the above conditions by the method of the invention are illustrated by Figs. 10 and 11. In performing tests to obtain Figs. 10 and 11, the length of the optical fibre on the shorter section was made equal to 2 m for both cases and the bending radius at the launching point was 2 mm. The measurement was taken 50 times. Fig. 10 is a histogram of the loss values of a silicone coated fibre (1.5 km long), Fig. 11 is a histogram showing the loss values of a polyethylene coated fibre (0.45 km long), for the conditions set out above, measured by this method. In the case shown in Fig. 10, the mean loss measured by this method, is 9.2 dB. For comparison the losses for the same sample, measured by the prior art cutback method is 9.1 dB. In the case shown in Fig. 11, the loss values, according to this method, average 3.9 dB, and the loss values measured by the cutback method average 3.8 dB.

The results of loss measurement according to the method of the present invention are therefore close to those obtained by the conventional cutback method.

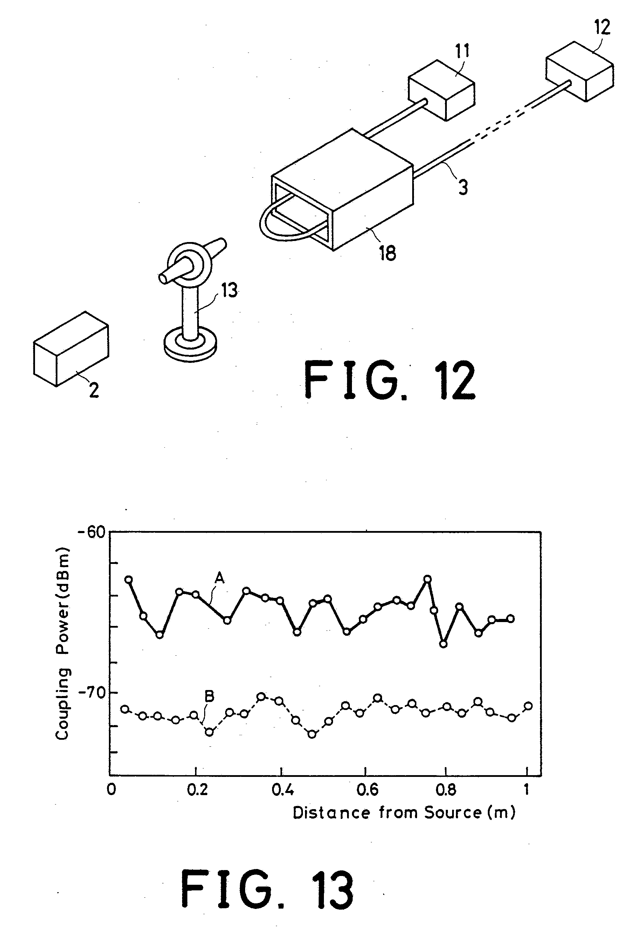

Fig. 12 is a perspective view of a further arrangement of the apparatus for bending an optical fibre. As shown in Fig. 12, a portion of an optical fibre 3 at about 2 m from an end of the optical fibre is bent and inserted into a sheath structure 18.

Measurement is carried out simply and stably by the use of the sheath structure.

The sheath structure 18 of Fig. 12 may be used to investigate the effects of varying the focussing of the light illuminating an optical fibre. An optical signal which illuminates the test optical fibre 3 is slightly defocussed by the lens system 13. Although the optical power coupled in the test fibre 3 became smaller, the optical power assumes stable values without much deviation. The structure shown in Fig. 12 is used to maintain a bend in a fibre at a position 450 m away from an optical detector 12. Optical power is measured with the detector 12 by moving the bending position by 4 cm once every 1 m for the total of 25 times. The result is shown in Fig. 13. Fig. 13A shows the result of measurement where the light output from a laser device illuminated an optical test fibre 3 without using the lens system 13. Fig. 13B shows the result of a measurement using the lens system 13 where the distance from the lens system 13 to the bent portion was set at about 20 mm and the laser beam was expanded to about 4 mm for illumination. The average value is 64.9 dB and the standard deviation is 1.04 dB in Fig. 13A. The average value is 71.1 dB and the standard deviation is 0.57 dB in Fig. 13B. The above results indicate that the deviation becomes small and the coupling power also becomes small, if the input light beams from a light source are defocussed.

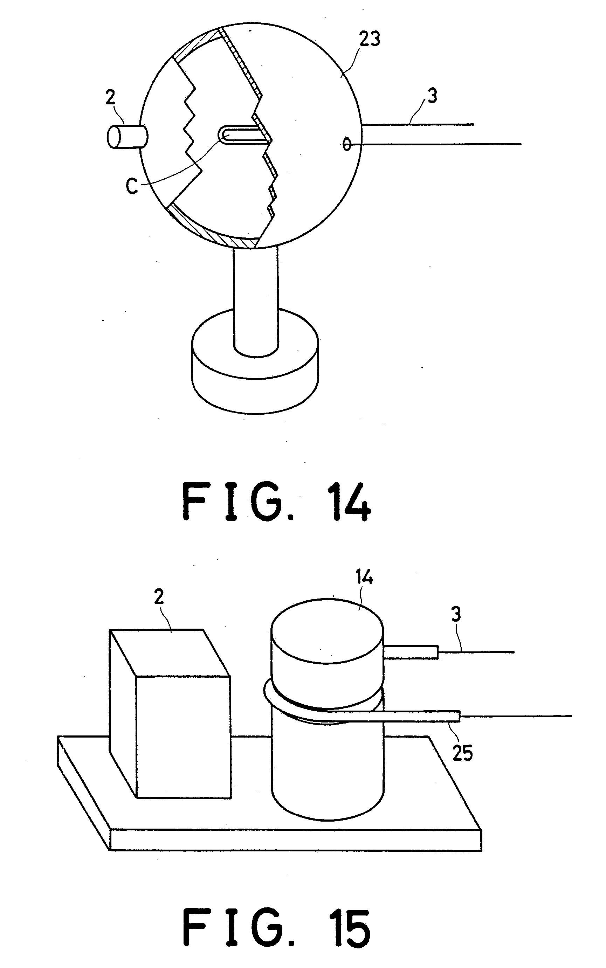

Structures where the optical coupling section is covered by a light scattering material will now be described. Fig. 14 shows the portion critical for coupling, of an apparatus for performing the method of this invention, wherein a bend is formed at the portion C of an optical test fibre and the portion is placed in a container 23. An optical source 2 is attached inside the container 23. The unique feature of this structure lies inside the container 23. The inside of the container 23 comprises light scattering material, for example, white paint. It may not be white but may be any paint which does not absorb energy at the wavelength of the optical signal but absorbs energy at other wavelengths. It may be a mirror the surface of which is opaque.

If the apparatus is arranged as above, the optical signal does not leak out of the container 23 but repeats diffused reflections within the container 23 and is thus contained therein. This enables uniformly illumination of the bent portion C to couple the optical signal into the fibre 3 equally in both directions at an excellent coupling efficiency.

Fig. 15 is a perspective view of another arrangement for performing the method of the present invention. In this arrangement, the optical fibre 3 is bent around a pin 14 and an optical signal illuminates the bent portion from a source 2. The optical fibre 3 is covered by a tube 25 made of a light scattering material, for example, a transparent tube the surface of which is made opaque or a transparent tube containing a large number of fine particles which scatter light.

In this structure the light illuminating the tube 25 is scattered to reach the optical fibre 3, which is, therefore, uniformly illuminated over the portion covered by the tube 25. The light may be coupled into the fibre 3 at a high efficiency.

Fig. 16 shows another arrangement for performing the method of the present invention. The bent portion of the fibre 3 is covered by two reflecting members 26, 27 so that the optical signal starting from the source 2 is reflected repeatedly, as shown by arrows in the figure, to illuminate the fibre 3. This structure enables the optical signal to illuminate evenly a desired length of the fibre without becoming concentrated on a particular portion and the optical signal coupled into the fibre 3 becomes uniform in both directions. The coupled optical power is increased as the fibre is illuminated repeatedly.

Fig. 17 shows another arrangement for performing the method of the present invention. An optical test fibre 3 is wound around a pin 14 several times in this arrangement which is otherwise the same as the one shown in Fig. 14. In this arrangement, the effective length of the bent portion is large and the coupling efficiency is high.

There are various mechanical structures besides those described above, for effecting bending a fibre. Although the arrangements described above are intended for use in laboratory, the present invention may be worked by the use of mechanical arrangements suitable for manufacturing plants or cable construction sites.

**Claims**

1. A method of measuring the losses of an optical fibre by launching light into the fibre, detecting the power levels of the light travelling along the fibre at two points along the fibre, and calculating the losses L from the equation

$$L = -10 \log_{10} P_2/P_1 \text{ db},$$

where $P_1$ and $P_2$ are the power levels of the light detected at the two points along the fibre, characterised in that the light is launched into the core of the fibre by bending the fibre, restorably, close to one of its ends with a radius of substantially no more than 3 mm and illuminating the fibre at the bend, and the optical power loss is calculated from the power levels of the light detected at the ends of the fibre.

2. A method of measuring the losses of an optical fibre as claimed in claim 1, which includes the step of covering the bent portion by means (23) having an inner surface of light scattering material.

3. A method of measuring the losses of an optical fibre as claimed in claim 2, which includes the step of providing an optical source (2) inside the light scattering surface.

4. A method of measuring the losses of an optical fibre as claimed in claim 2, which includes the step of providing an optical source (2) outside the light scattering surface.

5. A method of measuring the losses of an optical fibre as claimed in claim 1, which includes the step of enclosing the bent portion by means (26, 27) having an inner surface of light reflecting material and providing an optical source (2) inside the means (26, 27).

6. Apparatus for measuring the losses of an optical fibre (3) including a light source (2) for launching light into the fibre (3) and means (11, 12) for detecting the power levels of the light, travelling along the fibre (3), characterised in that the apparatus includes means (14, 18) for producing a removable bend in the fibre (3), close to one of its ends, with a radius of substantially no more than 3 mm in the vicinity of the light source (2) so as to launch light into the core of the fibre (3), and means (11, 12) arranged to detect the power levels of the light reaching the ends of the fibre (3).

7. Apparatus for measuring the losses of an optical fibre (3) as claimed in claim 6, which includes a sheath structure (18) arranged to produce a removable bend in the fibre by the enclosure of the fibre (3) in the sheath structure (18) at or near the bend.

8. Apparatus for measuring the losses of an optical fibre (3) as claimed in claim 6, which includes a pin (14) arranged to produce a removable bend in the fibre by the wrapping of the fibre (3) around the pin (14).

9. Apparatus for measuring the losses of an optical fibre (3) as claimed in claim 6, which includes means (23) having an inner surface of light scattering material covering the bent portion of the fibre (3).

10. Apparatus for measuring the losses of an optical fibre (3) as claimed in claim 6, which includes means (26, 27) having an inner surface of light reflecting material covering the bent portion of the fibre (3).

**Patentansprüche**

1. Verfahren zur Messung der Verluste einer Lichtleitfaser durch Einspeisen von Licht in die Faser, Feststellen der Energiepegel des die Faser entlang laufenden Lichts an zwei Stellen längs der Faser und Berechnung der Verluste L nach der Gleichung

$$L=-10 \log_{10} P_2/P_1 \text{ db},$$

worin $P_1$ und $P_2$ die an den zwei Punkten längs der Faser festgestellten Energiepegel sind, dadurch gekennzeichnet, daß das Licht in den Kern der Faser eingespeist wird durch rückstellbares Biegen der Faser nahe einem ihrer Enden mit einem Radius von im wesentlichen nicht mehr als 3 mm, die Faser an der Biegung beleuchtet wird und der optische Energieverlust aus den an den Faserenden festgestellten Energiepegeln des Lichts bereichnet wird.

2. Verfahren zur Messung der Verluste einer Lichtleitfaser nach Anspruch 1, das den Schritt umfaßt, Umhüllen des Biegeabschnitts mit einem Mittel (23), das eine innere Fläche aus Lichtstreuungsmaterial besitzt.

3. Verfahren zur Messung der Verluste einer Lichtleitfaser nach Anspruch 2, das den Schritt umfaßt, Vorsehen einer optischen Quelle (2) innerhalb der Lichtstreufläche.

4. Verfahren zur Messung der Verluste einer Lichtleitfaser nach Anspruch 2, das den Schritt umfaßt, Vorsehen einer optischen Quelle (2) außerhalb der Lichtstreufläche.

5. Verfahren zur Messung der Verluste einer Lichtleitfaser nach Anspruch 1, das den Schritt umfaßt, Umschließen des Biegeabschnitts durch Mittel (26, 27), die eine innere Fläche aus lichtreflektierendem Material besitzen, und Vorsehen einer optischen Quelle (2) innerhalb der Mittel (26, 27).

6. Vorrichtung zur Messung der Verluste einer Lichtleitfaser (3) mit einer Lichtquelle (2) zum Einspeisen von Licht in die Faser (3) und Mitteln (11, 12) zum Feststellen der Energiepegel des Lichts, das sich entlang der Faser (3) bewegt, dadurch gekennzeichnet, daß die Vorrichtung Mittel (14, 18) umfaßt zur Erzeugung einer entfernbaren Biegung in der Faser (3) nahe einem ihrer Enden mit einem Radius von im wesentlichen nicht mehr als 3 mm in der Nähe der Lichtquelle (2), um Licht in den Kern der Faser (3) einzuspeisen, und Mittel (11, 12) umfaßt, die zur Feststellung der Energiepegel des die Enden der Faser (3) erreichenden Lichts angeordnet sind.

7. Vorrichtung zur Messung der Verluste einer Lichtleitfaser (3) nach Anspruch 6 mit einem Hüllengebilde (18), angeordnet zur Erzeugung einer entfernbaren Biegung in der Faser durch das Umschließen der Faser (3) in dem Hüllengebilde (18) an oder nahe der Biegung.

8. Vorrichtung zur Messung der Verluste einer Lichtleitfaser (3) nach Anspruch 6 mit einem Dorn (14), angeordnet zur Erzeugung einer entfernbaren Biegung in der Faser durch Herumschlagen der Faser (3) um den Dorn (14).

9. Vorrichtung zur Messung der Verluste einer Lichtleitfaser (3) nach Anspruch 6 mit einem Mittel (23), das eine Innenfläche aus Lichtstreumaterial besitzt, die den Biegeabschnitt der Faser (3) umhüllt.

10. Vorrichtung zur Messung der Verluste einer Lichtleitfaser (3) nach Anspruch 6 mit Mitteln (26, 27), die eine Innenfläche aus lichtreflektierendem Material besitzen, die den Biegeabschnitt der Faser (3) umhüllt.

**Revendications**

1. Un procédé de mesure des pertes d'une fibre optique par introduction de lumière dans la fibre, par détection des niveaux d'énergie de la lumière se déplaçant le long de la fibre en deux points le long de la fibre et par calcul des pertes L à partir de l'équation

$$L=-10 \log_{10} P_2/P_1 \text{ db},$$

où $P_1$ et $P_2$ sont les niveaux d'énergie de la lumière détectée en deux points le long de la fibre, caractérisé en ce que la lumière est introduite dans le coeur de la fibre par coudage de la fibre, avec possibilité de retour à l'état initial, à proximité d'une de ses extrémités avec un rayon sensiblement non supérieur à 3 mm et par éclairement de la fibre dans le coude, et la perte d'énergie optique est calculée à partir des niveaux d'énergie de la lumière, détectés aux extrémités de la fibre.

2. Un procédé de mesure des pertes d'une fibre optique tel que revendiqué dans la revendication 1, qui comprend l'étape consistant à recouvrir la partie coudée par un moyen (23) comportant une surface intérieure formée d'un matériau de dispersion de lumière.

3. Un procédé de mesure des pertes d'une fibre optique tel que revendiqué dans la revendication 2, qui comprend l'étape consistant à disposer une source optique 2 à l'intérieur de la surface de dispersion de lumière.

4. Un procédé de mesure des pertes d'une fibre optique tel que revendiqué dans la revendication 2, qui comprend l'étape consistant à disposer une source optique 2 à l'extérieur de la surface de dispersion de lumière.

5. Un procédé de mesure des pertes d'une fibre optique tel que revendiqué dans la revendication 1, qui comprend l'étape consistant à entourer la partie coudée par des moyens (26, 27) comportant une surface intérieure formée d'un matériau de réflexion de lumière et à disposer une source optique (2) à l'intérieur des moyens (26, 27).

6. Appareil pour mesurer les pertes d'une fibre optique (3), comprenant une source lumineuse (2) pour introduire de la lumière dans la fibre (3) et des moyens (11, 12) pour détecter des niveau d'énergie de la lumière se déplaçant le long de la fibre (3), caractérisé en ce que l'appareil comprend des moyens (14, 18) pour produire un coude amovible dans la fibre (3), à proximité d'une de ses extrémités, avec un rayon sensiblement non-supérieur à 3 mm au voisinage de la source lumineuse (2) de façon à introduire de la lumière dans le coeur de la fibre (3), et des moyens (11, 12) agencés pour détecter des niveaux d'énergie de la lumière atteignant les extrémités de la fibre (3).

7. Appareil pour mesurer les pertes d'une fibre optique (3) tel que revendiqué dans la revendication (6), qui comprend une structure de gaine (18) agencée pour produire un coude amovible dans la fibre par l'enveloppement de la fibre (3) dans la structure de gaine (18) dans le coude ou à proximité de celui-ci.

8. Appareil pour mesurer les pertes d'une fibre optique (3) tel que revendiqué dans la revendication (6), qui comprend une broche (14) agencée pour produire un coude amovible dans la fibre par enroulement de la fibre (3) autour de la broche (14).

9. Appareil pour mesurer les pertes d'une fibre optique (3) tel que revendiqué dans la revendication (6), qui comprend un moyen (23) comportant une surface intérieure formée d'un matériau de dispersion de lumière et recouvrant la partie coudée de la fibre (3).

10. Appareil pour mesurer les pertes d'une fibre optique (3) tel que revendiqué dans la revendication (6), qui comprend des moyens (26, 27) comportant une surface intérieure en matière de réflexion de lumière qui recouvre la partie coudée de la fibre (3).

FIG. 1

FIG. 2

FIG. 3

# FIG. 4

0 145 343

FIG. 5

FIG. 6

FIG. 7

FIG. 8

# FIG. 9

FIG. 10

FIG. 11

# FIG. 12

# FIG. 13

# F I G. 14

# F I G. 15

FIG. 16

FIG. 17